# EUROPÄISCHE PATENTANMELDUNG

(11) **EP 2 230 225 A1**
(43) Veröffentlichungstag der Anmeldung: **22.09.2010**
(21) Anmeldenummer: 09002411.8
(22) Anmeldetag: 20.02.2009
(51) Int. Cl.: C04B 35/10, C04B 35/443, C04B 35/00, C04B 35/66, C04B 35/01, C04B 35/632, B22C 1/02

(54) **Keramisches Produkt**

(71) Anmelder: Hexion Specialty Chemicals GmbH, 58642 Iserlohn-Letmathe (DE)
(72) Erfinder: Suren, Josef, 33181 Bad Wünnenberg-Haaren (DE); Stracke, Peter, 58642 Iserlohn (DE); Aneziris, Christos, 09599 Freiberg (DE); Dudczig, Steffen, 09618 Großhartmannsdorf (DE)

(57) **Zusammenfassung**

Die Erfindung betrifft ein keramisches Produkt hergestellt aus einem Gemisch aus natürlichen und/oder synthetischen anorganisch-nichtmetallischen Rohstoffen, mindestens einem Bindemittel une gegebenenfalls weiteren Zusatzstoffen.

Um keramische Produkte bereitzustelien, die es ermöglichen, die aus dem Stand der Technik bekannten Nachteile zumindest hinsichtlich Korrosion und Erosion auszuräumen, wird vorgeschlagen, dass die keramischen Produkte hergestellt werden aus einem Gemisch, das
a) mindestens 10 Gew% (bezogen auf das Gewicht aller Feststoffe des Gemisches) oxidische Bestandteile,
b) 0,05 bis 2,7 Gew.% (bezogen auf das Gewicht aller Feststoffe des Gemisches) zumindest eines Bindemittels auf organischer Basis, das im Gemisch verflüssigend wirkt, und
c) 3 bis 10 Gew% (bezogen auf das Gewicht aller Feststoffe des Gemisches) wasserhaltiges Dispergiermedium enthält,

und das keramische Produkt nach seiner Verwendung bei Temperaturen oberhalb 600 °C weniger als 0,1 Gew.% (bezogen auf das gesamte Gewicht des keramischen Produktes) Kohlensfoff aufweist.

## Beschreibung

Die Erfindung betrifft ein keramisches Produkt hergestellt aus einem Gemisch aus natürlichen und/oder synthetischen anorganisch-nichtmetallischen Rohstoffen, mindestens einem Bindemittel und gegebenenfalls weiteren Zusatzstoffen.

Keramische Produkte besitzen einen Erweichungspunkt oberhalb von 1000 °C und finden daher einen breiten Einsatz z. B als so genannte feuerfeste Massen in Auskleidungen in metallurgischen Gefäßen oder als Schlüsselbauteile, wie beispielsweise Tauchausgüsse, Schieberplatten, Stopfen oder Gießrinnen im Stranggussbereich. Feuerfeste Erzeugnisse (Erweichungspunkt oberhalb von 1500°C) werden weiterhin im Hochofenbereich, in metallurgischen Transportgefaßen, in der Müllverbrennungsindustrie, in der Zementindustrie und in der chemischen Industrie als Auskleidungsmaterial eingesetzt.

Feuerfeste Erzeugnisse werden aufgrund der Verfahrenstechnologie in geformte Massen (Formkörper) und ungeformte Massen, d. h. Formgebung erfolgt während des Einsatzes, unterteilt.

Der Bereich der ungeformten feuerfesten Massen hat in den letzten 30 Jahren erheblich an Bedeutung hinzugewonnen. Mit einem Anteil von fast 45% der Gesamtproduktion feuerfester Baustoffe sind sie eine wesentliche Gruppe der Feuerfestkeramik. Die wichtigste Werkstoffgruppe der ungeformten feuerfesten Massen stellen Feuerbetone dar. Die ungeformten feuerfesten Massen sind heute weitgehend hochwertige, definierte Materialien, die qualitativ den geformten feuerfesten Erzeugnissen in keiner Weise unterlegen sind.

Die feuerfesten Massen bestehen aus einem Gemenge von körnigen feuerfesten mineralischen oxidischen und/oder nichtoxidischen Rohstoffen (wie z. B. Oxide: Al₂O₃, MgO, MgAl₂O₄, CaO, ZrO₂, Cr₂O₃, CeO₂, Y₂O₃, TiO₂ oder Rohstoffe die diese enthalten, wie Bauxit. Andalusit, Dolomit, Schammotte sowie Nichtoxide: beispielsweise SiC, Si₃N₄, BN, B₄C) mit einer in der Regel definierten, auf das jeweilige Verarbeitungsverfahren abgestimmten Kornverteilung. Da es sich hierbei um lose Komgemenge handelt, müssen diese mit geeigneten Bindemitteln oder Bindemittelkombinationen versetzt werden, um eine ausreichende Festigkeit der Materialien bei allen technologischen Prozessschritten wie Herstellung. Aufheizen und Einsatz zu gewährleisten. Bei den eingesetzten Bindemitteln handelt es sich um reaktive Stoffe, welche entweder unter der Mitwirkung von Wasser, Luft und/oder Wärme selbstständig erhärten. Desweiteren enthalten ungeformte feuerfeste Massen Zusatzstoffe wie z. B. verflüssiger oder Additive.

Das am häufigsten verwendete Bindemittel ist Zement auf der Basis von Kalziumaluminaten, den Tonerdezementen, die eine Verfestigung des feuerfesten Erzeugnisses infolge von Nydratationsvorgätngen (hydraulische Bindung) ermöglichen. Enthält die feuerfeste Masse allerdings Kalziumoxid, was in der Regel der Fall ist, kann es jedoch zu einer Beeinträchtigung der Materialeigenschaften aufgrund Bildung unerwünschter Phasen kommen, welche letztendlich die Eigenschaften sowie die Einsatztemperaturen der feuerfesten Masse verschiechtern bzw. verringern. Infolge dieser negativen Einflüsse hat es eine Vielzahl von Entwicklungen mit dem Ziel der Reduzierung bzw. der vollständigen Eliminierung von Tonerdezementen gegeben.
Die früheren klassischen Feuerbetone wurden mit einem Anteil von 15-20 % Tonerdezement hergestellt. Hierbei wurde die Anwendungsgrenztemperatur auf einen Bereich um 1500°C limitiert, da es infolge von Reaktionen zwischen Binderbestandteilen und der Körnung zur Bildung von niedrigschmelzenden Verbindungen kommt. Aufgrund dieser Erscheinungen kam es zur Entwicklung von zementamen Feuerbetonen. Bei dieser Technologie werden geringere Zementgehalte durch die Verwendung von Feinstfüllstoffen, wie z.B. Mikrosilika, in Verbindung mit Verflüssigern ermöglicht. Diese zernentarmen Feuerbetone zeichnen sich durch höhere Festigkeiten, aufgrund der optimierten Kompackung, einer erheblichen Verringerung des Festigkeitsminimums, einer hohen Dichte, verbunden mit einer geringeren und feineren Porosität aus. Die entwickelten zementarmen Feuerbetone sind jedoch aufgrund ihrer geringeren Porosität trocknungs- und aufheizempfindticher. Als Alternative zur hydraulischen Tonerdezementbindung hat sich in den letzten Jahren die Verwendung hydratisierbarer Übergangstonerden teilweise durchgesetzt. Bei diesem Bindemittel ist der negative Einfluss des Kalziumoxides ausgeschlossen.

Eine weitere Gruppe von Bindemitteln umfasst die chemisch-anorganischen Stoffe. Diese Bindung findet Verwendung bei plastischen Massen sowie bei Stampf-, Gieß- und Spritzmassen. Häufige Verwendung finden Wassergläser, auf der Basis von Alkali-Silikatlösungen, für einen Einsatzbereich von 100-100°C sowie Phosphatverbindungen, häufig Aluminiumphosphat, für einen höheren Temperaturbereich bis 1600°C. Die chemische Bindung zeichnet sich durch eine sehr gute Klebewirkung und das Nichtvorhandenseins eines Festigkeitsminimums aus. Jedoch auch hier kann der Chemismus des verwendeten Bindersystems zu unerwünschter Beeinträchtigung der Anwendungsgrenztemperatur führen. Des Weiteren können bei den chemisch gebundenen Systemen Wechselwirkungen mit in der Umgebung befindlichen Materialien durch beispielsweise Phosphatabdampfung nicht ausgeschlossen werden.

Eine organische Bindung feuerfester Massen in Form von Sulfitablaugen, Metylcellulosen, Alginaten, Ethylsilicate, Tetraethoxysilan sowie weitere Makromolekulare Substanzen liefert auch in vielen Fällen annehmbare Festigkeitswerte. Aber auch bei diesen Systemen kann in vielen Fällen eine Umitierung der Anwendungsfälle durch unerwünschte Reaktionen aufgrund von eingebrachten Verbindungen nicht ausgeschlossen werden. Zum Teil begrenzen auch hier die zugeführten chemischen Verbindungen die Anwendungsmöglichkeiten bzw. limitieren die mögliche Bindermenge. In vielen Fällen, wie z.B. bei Sulfitablaugen und Zellulosen, kann bei der organischen Bindung von einem temporären Binder gesprochen werden, da dieser beim Aufheizen ab einem bestimmten Temperaturbereich nahezu rückstandslos ausbrennt und somit seine Binderwirkung nur temporär zur Wirkung kommt. In einigen Fällen, wie z .B. bei Ethylsilikaten kann jedoch auch ein Teil des Bindersystems erhalten bleiben, im genannten Beispiel das Siliciumdioxid und somit weiterhin eine Binderwirkung besitzen.

Bei den ungeformten Erzeugnissen, insbesondere den hydraulisch gebundenen Materialien, sind die Trocknung sowie das Aufheizen ein häufig problematischer Vertahrensschritt, da relativ hohe Restfeuchten aus einem relativ dichten Gefüge entfernt werden müssen. Dies führt je nach Ausbildung der monolithischen Zustellung bzw. Größe des hergestellten Bauteils zu sehr langen Trocknungszeiten und birgt die Gefahr von Troknungsrissen und damit die Vorschädigung der Ausmauerung oder der vorgefertigten Bauteilen in sich. Beim ersten Aufheizen von monolithischen Erzeugnissen ist weiterhin zu beachten, dass diese sehr häufig ein Festigkeitsminimum, im Bereich von 300 bis 900°C, aufweisen. Dieses Minimum liegt im Temperaturbereich zwischen der Entwässerung der Hydratphasen und der Ausbildung der keramischen Bindung des Materials. Hierbei verursacht die Dehydratation der Binderphasen einen Verlust der Bindefestigkeit. Ein Anstieg der Festigkeit setzt erst bei beginnender Ausbildung der keramischen Bindung infolge von Sintervorgängen ab ca. 1000°C ein.

Die Verarbeitung bzw. Formgebung und die Temperaturbehandlung der ungeformten feuerfesten Massen erfolgt meistens am Einsatzort bzw. unter Einsatzbedingungen. Eine Verarbeitung erfolgt direkt im Anlieferungszustand oder nach Zugabe einer notwendigen Flüssigkeitsmenge. Eingebaut werden diese Massen mit Vibration, Gießen ohne Vibration (selbstfließende Massen), durch Stochern, Stampfen oder Spritzen. Die Bindung und Erhärtung der Massen erfolgt, meistens ohne Erwärmung. Nach der Zustellung mit feuerfesten Massen entstehen Auskleidungen, die im Vergleich zu Mauerwerken ein monolithisches, d.h. fugenfreies Erscheinungsbild aufweisen.

Die Herstellung von geformten feuerfesten Massen erfolgt in der Art, dass die Rohmasse in formgebende Gebilde z. B. zur Herstellung von feuerfesten Rohren oder Steinen gefüllt wird, diese entformt werden und ihnen bei einem Trocknungsprozess von mehreren Tagen bei ca 200 bis 700 °C das Wasser entzogen wird. Dieser Prozess ist sehr langwierig, bedarf aufgrund einer ausreichenden Rießfähigkeit einer großen Wassermenge, was wiederum einen entsprechend langen Trocknungsprozess nach sich zieht. Wird der Aufheizvorgang allerdings beschleunigt, sind Trocknungsrisse und Abplatzungen im fertigen Produkt die Folge.

Aus der EP 0 577 733 B1 ist bekannt, feuerfeste Massen aus Magnesia. Kalziumoxid, Aluminiumoxid, Aluminiumoxid Silikaten, Magnesia-, Aluminiumoxid-Spinellen und Mischungen hiervon, mit 5 bis 10 Gew% eines speziellen flüssigen resolphenolischen esterhärtbaren Harz und einem Ester als Härter herzustellen. Bei diesen Massen treten aber Inhomogenitäten aufgrund der hohen Viskosität während der Herstellung auf. Weiterhin verbleibt je nach Anwendung ein hoher Restkohlenstoff in der Masse. Dieser Restkohlenstoff (wie auch bei graphitenthaltenden Gemischen) kann während des Einsatzes der feuerfesten Masse aus dieser herausgebrannt werden, was zu einer höheren Porosität des feuerfesten Produktes führt. In diese Poren kann dann bei Kontakt mit z. B. flüssigem Eisen dieses in die Poren eindringen, was letztendlich zur Verringerung der Haltbarkeit des feuerfesten Produktes führt. Weiterhin wird der ausgebrannte Kohlenstoff von dem flüssigen Eisen absorbiert, was zu Qualitätseinbußen bei dem herzustellenden Stahl, insbesondere Edelstahl, führt.

Weiterhin ist aus der EP 0 530 943 B1 ein Verfahren zur Herstellung einer feuerfesten Masse bekannt, bei der die Verzögerung des Härtens bei Massen, die hart- oder totgebranntes Magnesia enthalten, durch die Verwendung von mindestens 3 Gew% eines härtbaren phenolischen Harzes und von Verbindungen, die Asparat-, Fluorid-, Bifluorid-, Malat-, Tatrat-, Citrat-, Phosphonatanionen liefern sowie ein spezielles Tetraalkoxysilan enthalten, erzielt wird.
Allerdings hat sich gezeigt, dass die angegebene Zusammensetzung dazu führte, dass während der Herstellung hohe Viskositäten auftraten. Diese sind verarbeitungstechnisch ungünstig, da die formgebende Umgebung nicht komplett ausgefüllt wird.

Auch werden in der JP 07330451- A, JP 05070246-A und JP 2008-0249 feuerfeste Massen erwähnt, die mineralische Bestandteile, synthetische Harze als Bindemittel und weitere organische Zusatzstoffe enthalten. Dadurch werden die Eigenschaften verschiedenartig beeinflusst.

Der hier vorliegenden Erfindung liegt nunmehr die Aufgabe zugrunde, keramische Produkte bereitzustellen, die es ermöglichen, die aus dem Stand der Technik bekannten Nachteile zumindest hinsichtlich Korrosion und Erosion auszuräumen.

Gelöst wird diese Aufgabe erfindungsgemäß dadurch, dass das keramisches Produkt hergestellt wird aus einem Gemisch aus natürlichen und/oder synthetischen anorganisch-nichtmetallischen Rohstoffen, mindestens einem Bindemittel und gegebenenfalls weiteren Zusatzstoffen, wobei das Gemisch
a) mindestens 10 Gew% (bezogen auf das Gewicht aller Feststoffe des Gemisches) oxidische Bestandteile,
b) 0,05 bis 2,7 Gew.% (bezogen auf das Gewicht aller Feststoffe des Gemisches) zumindest eines Bindemittels auf organischer Basis, das auf das Gemisch verflüssigend wirkt und
c) 3 bis 10 Gew% (bezogen auf das Gewicht aller Feststoffe des Gemisches) wasserhaltiges Dispergiermedium enthält,
   und das keramische Produkt nach seiner Verwendung bei Temperaturen oberhalb 600 °C weniger als 0,1 Gew.% (bezogen auf das gesamte Gewicht des keramischen Produktes) Kohlenstoff aufweist.

Überraschenderweise hat sich nämlich gezeigt, dass bei der Herstellung des erfindungsgemäßen keramischen Produktes das Gemisch eine verarbeitungstechnisch günstig niedrige Viskosität aufweist, so dass auf zusätzliche Verflüssiger, deren Bereitstellung mit zusätzlichen Kosten verbunden ist und wiederum Einflüsse auf andere Eigenschaften haben kann, verzichtet werden kann. Eine niedrige Viskosität des Gemisches bewirkt, dass aufgrund der guten Fließfähigkeit die formende Umgebung gut ausgefüllt wird und somit ein qualitativ hochwertiges keramisches Produkt erzeugt wird. Außerdem bedarf es während der Herstellung des keramischen Produktes einer geringeren Menge an Wasser, wodurch Trocknungszeiten verkürzt und Trocknungsrisse sowie Abplatzungen im bzw. am keramischen Produkt vermieden werden.

Die erfindungsgemäßen keramischen Produkte, die weniger als 0,1 Gew% (bezogen auf das gesamte Gewicht des keramischen Produktes), bevorzugt 0 % Kohlenstoff enthalten, zeichnen sich weiterhin im Vergleich zu herkömmlichen feuerfesten Massen, die in der Regel Feuerbetone enthaften, darin aus, dass die erfindungsgemäßen keramischen Produkte zumindest eine höhere Kattbiegefestigkeit und Dichte nach dem Trocknen und eine niedrigere Porosität nach dem Ausbrennen aufweisen. Des Weiteren können die erfindungsgemäßen keramischen Produkte mit herkömmlicher Fertigungstechnologie hergestellt werden, so dass hierfür kein zusätzlicher Aufwand betrieben werden muss. So ist ein Entformen gefertigter Bauteile bzw. Entschalen monolithischer Zustellungen in gleichen Zeiten möglich. Der anschließende Trocknungsschritt gestaltet sich weniger problematisch, da erfindungsgemäß keine Hydratphasen gebildet werden, die in speziellen Temperaturbereichen zu einer vermehrten Wasserabspaltung führen können. Als Trocknungshitfe können, wie bei den herkömmlichen Massen mit hydraulischer Bindung, Fasern (z. B. Naturfasern, Kunststofffasern) zur Bildung von Kanälen für das Entweichen von physikalisch gebundenem Wasser, zugesetzt werden. Zur Gefügeverstärkung während der Trocknung, des Aufheizens sowie des Einsatzes ist es weiterhin möglich, metallische und/oder nichtmetallische Fasern zuzusetzen. Weiterhin haben die erfindungsgemäßen Gemische aufgrund ihres sehr geringen Kohlenstoffanteils (oder bevorzugt Kohlenstofffreiheit) nunmehr keinen Einfluss auf die Stahlqualität mehr.

Als natürliche und/oder synthetische anorganisch-nichtmetallische Rohstoffe werden bevorzugt Al₂O₃, MgO, SiO₂, CaO, ZrO₂, Cr₂O₃, CeO₂, Y₂O₄, TiO₂ und/oder aber auch beispielsweise MgAl₂O₄, Spinell.

Forsterit, Bauxit, Andalusit, Dolomit und/oder Schammotte als oxidische Bestandteile enthaltende Rohstoffe eingesetzt. Weiterhin können auch nicht-oxidische als natürliche und/oder synthetische anorganisch-nichtmetallische Rohstoffe wie bevorzugt BN, SiC, Si₃N₄, B₄C oder aber auch TiN und/oder TiC verwendet werden. Es sind aber auch andere aus dem Stand der Technik bekannte natürliche und/oder synthetische anorganisch-nichtmetatllische Rohstoffe denkbar.
Erfindungsgemäß enthält das keramische Produkt mindestens 10 Gew% (bezogen auf das Gewicht aller Feststoffe im Gemisch) oxidische Bestandteile (wie oben ausgeführt).
Werden weniger als 10 Gew% oxidische Bestandteile eingesetzt, zeigte sich bei der Masse eine partielle Entmischung der festen Körnung und des Dispergiermediums.
Bevorzugt ist, wenn mindestens 10 Gew% oxidische Bestandteile für die Herstellung des keramischen Produktes verwendet werden, da oberhalb 10 Gew.% eine Entmischung und Sedimentationsneigung der feuerfesten Körnung nicht mehr stattfindet.

Besonders bevorzugt ist, wenn das Verhältnis der oxidischen zu den nicht-oxidischen Bestandteilen 80:20 bis 50:50 beträgt, was Vorteile bezüglich der Verarbeitbarkeit als auch der Hochtemperatureigenschaften wie z. B. Kriechbeständigkeit, mit sich bringt.

Die Versätzen aus den angeführten Rohstoffen sind je nach erforderlichen Verarbeitungsverfahren, wie zum Beispiel Verdichtung mittels Vibration, Gießen ohne Vibration (selbstfließende Massen), durch Stochern, Stampfen oder Spritzen, im Komband abgestimmt. Die Abstimmung des Kombandes erfolgt unter Zuhilfenahme gebräuchlicher Theorien, wie zum Beispiel die Verteilung nach Andreassen. Hierbei werden die Massen bezüglich einer ldealverteilung mit einem, für die verschiedenartigen Verarbeitungstechnologien günstigen, Kömungsfaktor optimiert. Der Kömungsfaktor gibt den Anstieg der Komgrößensummenverteilung in logarithmischer Darstellung wieder. So werden im Allgemeinen selbstfließende Massen (Verdichtung ohne äußere Krafteinwirkung) mit einem für diese Massen günstigen Kömungsfaktor zwischen 0,25 und 0,30 ausgelegt. Bei Vibrationsmassen werden allgemein darüber liegende Werte für den Kömungsfaktor im Bereich von 0,30 -0,35 angenommen. Die Massen bestehen im Feinkom, Mittelkom und Grobkom-Bereich aus den jeweiligen feuerfesten Oxiden, natürlichen bzw. synthetischen Rohstoffen aus Verbindungen der feuerfesten Oxide und/oder Mischungen der genannten Materialien. Die Komgrößenbereiche umfassen Partikel im Nanometerbereich bis hin zum Grobkombereich der bis zu 15mm Komdurchmesser betragen kann. Letztendlich kann gesagt werden, dass ein Ersatz in allen bis zum jetzigen Stand der Technik verwendeten feuerfesten oxidischen bzw. Oxide als Hauptkomponenten enthaltende Massen möglich ist.

Als Bindemittel auf organischer Basis werden bevorzugt synthetisch hergestellten Bindemittel wie Phenolharze, Epoxidharze, Furanharze, Aminoharze, Alkydharze, Resorcinharze und/oder wässrige Dispersionen aus Novolaken, Resolen und/oder Epoxidharzen, Acrylatdispersionen und/oder Polyurethandispersionen und/oder aus natürlichen Rohstoffen hergestellte Bindemittel, wie Zucker, Glukose, Polysacharide, Tanine und/oder Lignine. Die natürlichen Rohstoffe sind aufgrund ihres Nachwachsens von Vorteil. Phenolharze. Furanharze, Epoxidharze sowie Aminoharze sind bei Raumtenperatur härtbar, was bei dieser Anwendung von großem Vorteil ist. Auf einen zusätzlichen Härter kann daher verzichtet werden. Bei der Verwendung von Dispersionen ist vorteilhaft, dass diese monomerarm, niedrigviskos und wässrig sind.

Besonders bevorzugt ist die Verwendung von wässrigen Phenolharzen, da diese unter Zusatz eines Härters bei Raumtemperatur härtbar, die Härtungszeiten gut zu variierenn sind und in der Regel keine organischen Lösungsmitten enthalten.

Zur Herstellung des erfindungsgemäßen keramischen Produktes wird das Bindemittel auf organischer Basis in einer Konzentration von 0,05 bis 2,7 Gew% (bezogen auf das Gewicht aller Feststoffe des Gemisches) zugefügt. Werden weniger als 0,05 Gew% zugesetzt, zeigte sich kein ausreichender Effekt hinsichtlich Festigkeit und FlieBverhalten. Bei Konzentrationen über 2,7 Gew% wurde überraschenderweise festgestellt, dass die verflüssigende Wirkung des Bindemittels auf das Gemisch nachlässt, ja sogar das Gemisch nicht mehr fließfähig ist. Besonders bevorzugt ist, wenn das Bindemittel auf organischer Basis in einer Konzentration von 0,5 bis 2,0 Gew% zugegeben wird. Dann ist die verflüssigende Wirkung am größten und die Porosität nach dem Brand am niedrigsten.

Als weiteren Bestandteil enthält das Gemisch zur Herstellung des erfindungsgemäßen keramischen Produktes ein wasserhaltiges Dispergiermedium (im einfachsten Fall Wasser) in einer Konzentration von 3 bis 10 Gew% (bezogen auf das Gewicht aller Feststoffe des Gemisches). Das wasserhaltige Dispergiermedium wirkt viskositätsmindend, so dass in diesem Bereich eine optimale Verarbeitung des Gemisches gewährleistet wird.

Weiterhin ist vorteilhaft, wenn das Gemisch als weiteren Zusatzstoff einen Härter enthält. Dieser Härter wird in einer bevorzugten Konzentration von 0.1 bis 0,6 Gew% bezogen auf (bezogen auf das Gewicht aller Feststoffe des Gemisches) zugegeben, da speziell in diesem Bereich Härtungsgeschwindigkeit sowie resultierende Festigkeiten den Notwendigkeiten entsprechen. Verwendet werden können alle aus dem Stand der Technik bekannten Härter, die für die entsprechenden Harze geeignet sind. Besonders bevorzugt ist, wenn der Härter ausgewählt ist aus dem Bereich der Ester (niedermotekutare Lactone, wie z.B. Butyrolacton, Caprolacton, Propiollacton, Pentyllacton, Propylencarbonat, Ethylencarbonat, u. ä.) Säuren (z. B. p-Phenolsulfonsäure) oder Aminen (z.B. Polyaminen (aliphatisch, cyloaliphatisch oder aromatisch), Polyamiden, Mannich Basen, Polyaminoimidazolin, Polyethteraminen), jedoch kann der Härter auf den speziellen Einsatz des Harzes abgestimmt werden.
Speziell bei den Estern lässt sich die Härtungszeit exakt dem Verarbeitungsprozess anpassen.

Generell ist es aber auch möglich auf die Verwendung eines Härters zu verzichten, wobei dann die Härtung unter Temperatureinwirkung stattfindet. Damit verbunden ist wiederum der Vorteil, dass auf eine Komponente verzichtet werden kann, was kostengünstig ist und die keinen Einfluss auf weitere Eigenschaften des Gemisches haben kann.

Weitere organische und/oder anorganische Zusatzstoffe, die z. B. die Verflüssigung und/oder Binderfunktion des Gemisches unterstützen sind denkbar, aber nicht erforderlich, sodass die Bereitstellung und die damit verbundenen Kosten wegfallen. Aufgrund der geringen Anzahl der Komponenten wird auch deren evtl. nicht erwünschter Einfluss auf die Eigenschaften des Gemisches bzw. des keramisches Produktes vermieden.

Das erfindungsgemäße keramische Produkt weist nach dessen Verwendung oberhalb 600 °C weniger als 0,1 Gew.% (bezogen auf das gesamte Gewicht des keramischen Produktes) Kohlenstoff auf, wobei besonders bevorzugt ist, wenn das erfindungsgemäße keramische Produkt nachweislich keinen Kohlenstoff enthält. Die Auswahl der einzelnen Komponenten des Gemisches als auch die Verwendungsparameter sind demnach erfindungsgemäß so gewählt, dass weniger als 0,1 Gew% Kohlenstoff in dem ausgehärteten Produkt enthalten sind.

Das erfindungsgemäße keramische Produkt kann hergestellt werden nach einem Verfahren folgende Schritte enthaltend:
a) Herstellung des homogenen Gemisches,
b) Formgebung des Gemisches und Trocknung und /oder Härtung oberhalb 15 °C und
c) gegebenenfalls Entformung und weitere Trocknung und/oder Härtung bei Temperaturen oberhalb von 50 °C.

Zur Herstellung von geformten sowie auch ungeformten Produkten werden die keramischen Rohstoffe mit einem entsprechenden Kömungsaufbau in einem Mischer z. B. der Fa. Eirich homogen mit der entsprechenden Bindemittelmenge vermischt.
Bei der Herstellung von ungeformten Massen werden die Mischungen dann verpackt und zum Einsatzort transportiert. Vor Ort wird die richtige Menge an Härter und Wasser in einem Mischer zugemischt und die gießfähige Masse dann dem auszukleidenden Aggregat zugeführt z. B. gepumpt. Bei Herstellung von geformten Produkten wird die Mischung aus Rohstoffen und Bindemittel im Mischer direkt mit evtl. einer entsprechenden Härter - und Wassermenge gemischt. Die Mischung wird in einer Form soweit getrocknet bzw. angehärtet, bis sie eine ausreichende Festigkeit zum Entformen hat. Entweder wird der Formkörper dann direkt zum Einsatz gebracht, oder er wird einem weiteren Temperprozess unterzogen, der bei einer Temperatur von 120 -180 °C über einen Zeitraum von mehreren Stunden ablaufen kann.

Die erfindungsgemäßen keramischen Produkte können z. B. in Aggregaten in der metallurgischen Industrie angewendet werden.

Anhand eines Ausführungsbeispiel soll die Erfindung näher erläutert werden.

Die in der Tabelle 1 angegebenen Zusammensetzungen können für geformte, wie z. B. Spülkegel und/oder ungeformte Feuerfestprodukte, wie z. B. Auskleidung einer Stahl - Transportpfanne eingesetzt werden. Hierbei handelt es sich um zwei Versätze (Versätze 2 und 3) mit dem erfindungsgemäßen Gemisch, ein herkömmliches auf hydratisierbarer Tonerde (Alphabond 300. Firma Almatis) basierendes System (Masseversatz 1) und einem Vergleictimasseversatz 4. Alle vier Masseversätze basieren auf einer abgestimmten Mischung aus Aluminiumoxid (Tabulartonerde T60/T64 der Firma Almatis) sowie aus aiuminiumoxidreichen Magnasium-aluminat-Spineil (AR78 der Firma Almatis). In Tabelle 1 sind die Zusammensetzungen der vier Ausführungsbeispiele dargestellt, Die Unterschiede in den Versätzen bestehen darin, dass der herkömmliche Versatz (Masseversatz 1) neben dem zugesetzten Binder Alphabond300 (hydratisierbare Tonerde) auch die Additive ADW1 und ADS1 (Dispergiertonerden) enthält. Dahingegen ist bei den anderen beiden Versätzen (Masseversatz 2 und Masseversatz 3) ersichtlich, dass hier kein Alphpabond300 sowie keine Additive ADW und ADS zugesetzt wurden. Der Masseversatz 2 enthält 2% und der Masseversatz 3 enthält. 1% des Bindemittels auf organischer Basis des erfindungemäßen Gemisches.

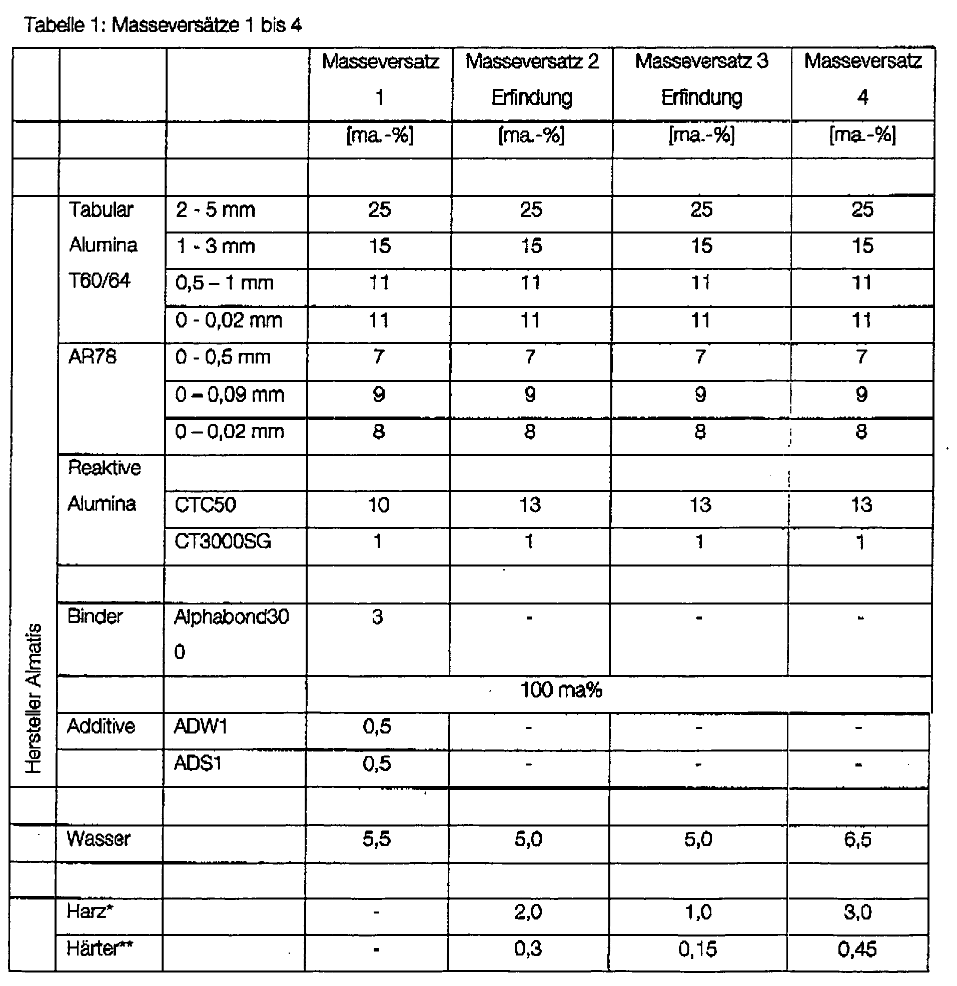

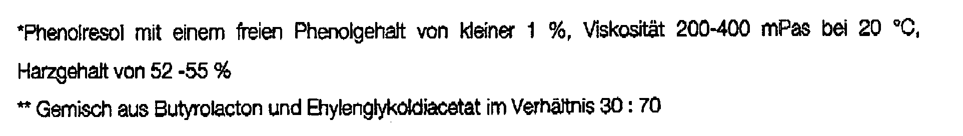

Die Masseversätze wurden in einem Labormischer der Firma ToniTechnik nach der gebräuchlichen Betontechnologie gemischt und anschließend Probekörper mit den Abmessungen 40x40x160 mm gegossen. Diese wurden nach 3 Stunden entformt, bei 120°C bis zur Massekonstanz getrocknet. In Tabelle 2 sind einige Materialkennwerte der hergestellten Proben dargestellt. Der Masseversatz 4 war nicht gießfähig,

**Tabelle 2: Materlalkennwerte**

| Behandlungs-temperatur | Material-Kennwert | Masseversatz 1 | Masseversatz 2 Erfindung | Masseversatz 3 Erfindung |
|---|---|---|---|---|
| | | | | |
| 120°C Trocknung | Rohdichte [g/cm³] | 2,90 | 2,97 | 2,95 |
| | Kaltbiegefestigkeit [MPa] | 3,20 | 5,53 | 4,63 |
| | | | | |
| Brand | Rohdichte [g/cm³] | 3,05 | 2,91 | 3,04 |
| 1650°C | Kaltbiegefestigkeit [MPa] | 39,80 | 33,96 | 37,07 |
| | Dyn. E-Modul [GPa] | 69 | 63 | 85 |
| | Offene Porosität [%] | 17,1 | 15,4 | 15,4 |
| | Kohlenstoffgehalt [%] | 0 | 0 | 0 |

Die erfindungsgemäßen Massen sind unempfindlich gegenüber Trocknungsrissen, besitzen deshalb auch höhere Grünfestigketten und die geringeren Porositäten tragen nach dem Brand zu verbesserten Korrosions- und Erosionseigenschafton bei.

## Patentansprüche

1. Keramisches Produkt hergestellt aus einem Gemisch aus natürlichen und/oder synthetischen anorganisch-nichtmetallischen Rohstoffen, mindestens einem Bindemittel und gegebenenfalls weiteren Zusatzstoffen, wobei das Gemisch
a) mindestens 10 Gew% (bezogen auf alle Feststoffe des Gemisches) oxidische Bestandteile,
b) 0,05 bis 2,7 Gew.% (bezogen auf alle Feststoffe des Gemisches) zumindest eines Bindemittels auf organischer Basis, das in dem Gemisch verflüssigend wirkt, und
c) 3 bis 10 Gew% (bezogen auf alle Feststoffe des Gemisches) wasserhaltiges Dispergiermedium enthält,
und das keramische Produkt nach seiner Verwendung bei Temperaturen oberhalb 600 °C weniger als 0,1 Gew.% (bezogen auf das gesamte Gewicht des keramischen Produktes) Kohlenstoff aufweist.

2. Keramisches Produkt nach Anspruch 1, **dadurch gekennzeichnet, dass** das Verhältnis der oxidischen zu den nicht-oxidischen Bestandteilen 80:20 bis 50:50 ist.

3. Keramisches Produkt nach zumindest einem der vorhergehenden Ansprüche, **dadurch gekennzeichnet, dass** die oxidischen Bestandteile ausgewählt sind aus Al₂O₃, MgO, MgAl₂O₄, CaO, ZrO₂, Cr₂O₃, CeO₂, Y₂O₂ und/oder TiO₂ und/oder natürlichen und/oder synthetischen Rohstoffen, die diese enthalten.

4. Keramisches Produkt nach zumindest einem der vorhergehenden Ansprüche, **dadurch gekennzeichnet, dass** die nicht-oxidischen Bestandteile ausgewählt sind aus SiC, Si₃N₄, BN und/oder B₄C.

5. Keramisches Produkt nach zumindest einem der vorhergehenden Ansprüche, **dadurch gekennzeichnet, dass** das Bindemittel auf organischer Basis ausgewählt ist aus synthetisch hergestellten Bindemitteln wie Phenolharzen, Epoxidharzen, Furanharzen, Aminoharzen, Alkydharzen, Resorcinharzen und/oder wässrigen Dispersionen aus Novolaken, Resolen und/oder Epoxidharzen, Acrytatdispersionen und/oder Polyurethandispersionen und/oder aus natürlich hergestellten Bindemitteln, wie Zucker, Glukose, Polysacharide, Ugnine und/oder Tanine.

6. Keramisches Produkt nach Anspruch 5, **dadurch gekennzeichnet, dass** das Bindemittel auf organischer Basis ein wässriges Phenolharz ist.

7. Keramisches Produkt nach zumindest einem der vorhergehenden Ansprüche, **dadurch gekennzeichnet, dass** das Gemisch als weiteren Zusatzstoff einen Härter enthält.

8. Keramisches Produkt nach Anspruch 7, **dadurch gekennzeichnet, dass** der Härter ausgewählt ist aus der Gruppe der Ester, Säuren und/oder Aminen.

9. Keramisches Produkt nach zumindest einem der vorhergehenden Ansprüche, **dadurch gekennzeichnet, dass** das Produkt ein feuerfester Formkörper ist.

10. Keramisches Produkt nach zumindest einem der vorhergehenden Ansprüche, **dadurch gekennzeichnet, dass** die Formgebung des Produktes während des Ensatzes erfolgt.

11. Verwendung des keramischen Produktes nach zumindest einem der vorherigen Ansprüche in Aggregaten in der metallurgischen Industrie.

12. Verfahren zur Herstellung eines keramischen Produktes nach Anspruch 9 oder 10 folgende Schritte enthaltend.
a) Herstellung des homogenen Gemisches,
b) Formgebung des Gemisches und Trocknung und /oder Härtung oberhalb 15 °C und
c) gegebenenfalls Entformung und weitere Trocknung und/oder Härtung bei Temperaturen oberhalb von 50 °C.
